# EUROPÄISCHE PATENTANMELDUNG

(11) **EP 4 019 430 A1**
(43) Veröffentlichungstag der Anmeldung: **29.06.2022**
(21) Anmeldenummer: 20216258.2
(22) Anmeldetag: 22.12.2020
(51) Int. Cl.: B65D 85/804, A47J 31/36

(54) **KAPSEL, VERFAHREN UND SYSTEM ZUR ZUBEREITUNG EINES GETRÄNKS**

(71) Anmelder: Delica AG, 5033 Buchs AG (CH)
(72) Erfinder: Affolter, Roland, 5103 Möriken (CH); Brönnimann, Markus, 3274 Hermrigen (CH); Kurtz, Olivia, 8057 Zürich (CH); Siefarth, Caroline, 4054 Basel (CH); Steinbrückner, Kathrin, 4127 Birsfelden (CH); Thilla, Tim, 79576 Weil am Rhein (DE); Tschopp, Patrick, 4125 Riehen (CH); Wüthrich, Martin, 4125 Riehen (CH); Zweifel, Micha, 8004 Zürich (CH)
(74) Vertreter: Hepp Wenger Ryffel AG

(57) **Zusammenfassung**

Kapsel (1) zur Zubereitung eines Getränks umfassend
- ein Kernmaterial (3) umfassend einen Pressling und
- eine das Kernmaterial umschliessende Hülle (2),
wobei die Kapsel (1) in einem Bruchfestigkeitstest eine maximale prozentuale Ausdehnung in einer Richtung quer zu einer Pressrichtung von wenigstens 15 % aufweist.

## Beschreibung

Die vorliegende Erfindung betrifft eine Kapsel, ein Verfahren und ein System zur Zubereitung eines Getränks, insbesondere eines Heissgetränks, mit den Merkmalen des Oberbegriffs der unabhängigen Ansprüche.

Die Bereitstellung eines Genussmittels wie Kaffee in Kapselform ist hinlänglich bekannt. Die üblicherweise als Hüllmaterial eingesetzten Werkstoffe wie Kunststoffe oder Aluminium (vgl. z.B. EP 0 468 079 A1) weisen aber den Nachteil auf, dass sie üblicherweise nur mit grossem Aufwand rezyklierbar und meist nicht kompostierbar sind.

Es sind auch Kapseln aus kompostierbaren Materialien oder solche mit einem Filterpapier als Hülle bekannt. So offenbart die DE 10 2018 201 187 B3 eine Kapsel aus einem mit Biokunststoff compoundierten Holzmaterial. Die Problematik von Kapseln aus kompostierbaren Materialien liegt in deren Verarbeitung. Zwar können diese Kapseln je nach verwendetem Material in Spritzgusstechnik hergestellt werden, die Masshaltigkeit ist jedoch aufgrund des hohen Faseranteils schwierig zu gewährleisten. Insbesondere Dichtkonturen, welche die Zubereitung eines Getränkes unter hohem Druck ermöglichen, sind nur schwer mit geringen Toleranzen auszubilden.

Es ist Aufgabe der Erfindung, die Nachteile des Standes der Technik zu überwinden. Insbesondere sollen eine Kapsel und ein Verfahren zur Zubereitung eines Getränks zur Verfügung gestellt werden, bei welcher eine optimale Abdichtung auch mit kompostierbaren Materialien sowie unterschiedlichen Kapselgrössen und Kapselgeometrien ermöglicht wird.

Diese Aufgabe wird durch die in den unabhängigen Patentansprüchen definierten Vorrichtungen, Verfahren und System gelöst. Weitere Ausführungsformen ergeben sich aus den abhängigen Patentansprüchen.

Eine erfindungsgemässe Kapsel zur Zubereitung eines Getränks, insbesondere eines Heissgetränks, weist ein Kernmaterial zur Getränkezubereitung auf, umfassend einen Pressling oder ein Schüttgut, sowie eine das Kernmaterial umschliessende Hülle. Das Kernmaterial kann ausgewählt sein aus der Gruppe bestehend aus Kaffeepulver, Tee, Kakao, Trinkschokolade, Milchpulver, Instantkaffee und Trockensuppe und Kombinationen davon. Die Kapsel weist erfindungsgemäss, insbesondere nach einem Benetzen oder Umspülen mit Wasser, in einem Bruchfestigkeitstest eine maximale prozentuale Ausdehnung in einer Richtung quer zu einer Pressrichtung gegenüber dem ursprünglichen Zustand von wenigstens 15 %, insbesondere wenigstens 20 %, bevorzugt wenigstens 25 %, besonders bevorzugt wenigstens 30 % auf.

Für den Bruchfestigkeitstest wird die Kapsel zwischen zwei parallelen Platten einer Zug-Druck-Prüfmaschine (beispielsweise mit einem Kraftaufnehmer Xforce P der Firma Zwick/Roell ausgestattet) positioniert. Dabei wird die Kapsel mittig auf der unteren Platte in Extraktionsrichtung, im Falle eines drehsymmetrischen Presslings, beispielsweise mit Kugel- oder Würfelform, in Pressrichtung ausgerichtet. Die Platten weisen einen Durchmesser auf, welcher wenigstens 50 % grösser ist als der maximale Kapseldurchmesser. Die parallelen Platten werden langsam zusammengefahren und ein Kraft-Weg-Diagramm aufgezeichnet. Die Belastung wird erhöht bis zur Beschädigung der Hülle. Gleichzeitig mit diesem Anriss oder Bruch ist ein Kraftabfall festzustellen. Wenn die gemessene Kraft unter die Kraftabfallschwelle von 40 % der maximalen Kraft absinkt, wird der Bruchfestigkeitstest beendet. Die maximale gemessene Kraft ohne Beschädigung der Hülle wird als Bruchfestigkeit ausgegeben. Bei einer mehrschichtigen Hülle wird Beschädigung oder ein Durchriss der Hülle bis auf das Kernmaterial als Beschädigung der Hülle verstanden. Gleichzeitig wird die Ausdehnung der Kapsel in einer Richtung quer zur Pressrichtung, also in Richtung parallel zu den Platten, aufgezeichnet. Das Aufzeichnen der Ausdehnung in Querrichtung wird visuell erfasst. Ein allfällig vorhandener Flansch der Kapselhülle wird bei der Erfassung der Ausdehnung nicht berücksichtigt. Die Ausdehnung wird dabei in zwei zueinander senkrecht stehenden Richtungen erfasst. Aus den beiden Messwerten wird ein Mittelwert gebildet. Die maximale Ausdehnung quer zur Pressrichtung wird bei der maximalen Kraft ohne Beschädigung, also bei der Bruchfestigkeit, bestimmt. Sollte die Kapsel bei einer Kraft von 600 N nicht beschädigt werden, wird die maximale Ausdehnung bei einer Kraft von 600 N bestimmt.

Je nach Ausgestaltung der Hülle kann deren Verformbarkeit durch Benetzen oder Umspülen mit Wasser beeinflusst werden. Beispielsweise kann die Kapsel vor der Durchführung des Bruchfestigkeitstests in einem Wasserbad mit einer Temperatur von 75 °C für 5 s eingetaucht und unter Wasser gehalten werden. Das Wasser ist dabei drucklos. Die Kapsel befindet sich nach einem solchen Benetzten oder Umspülen in einem nassen Zustand.

Durch eine solche Verformbarkeit wird sichergestellt, dass sich die Kapsel bei einer von der Brühkammer abweichenden Form beim Verschliessen der Brühkammer oder beim Einleiten einer Brühflüssigkeit, üblicherweise heissem Wasser, der Form der Brühkammer anpassen kann. Es kann gewährleistet werden, dass die Kapsel dicht an den Wänden der Brühkammer anliegt und die gesamte Menge der Brühflüssigkeit durch die Kapsel hindurch geleitet werden kann. Eine mangelhafte Qualität des zubereiteten Getränks durch eine Leckage entlang der Aussenseite der Kapsel kann verhindert werden.

Das Kernmaterial kann beispielsweise als loses Schüttgut vorliegen. Ebenso ist es denkbar, dass das Schüttgut durch einen vorgeschalteten Prozess verdichtet, agglomeriert oder zu einem Pressling verpresst wird. Das Kernmaterial kann aus mehreren Teilen zusammengesetzt sein.

Auch die Hülle kann ein- oder mehrteilig sein. Die Hülle kann beispielsweise separat hergestellt und anschliessend mit dem Kernmaterial befüllt und verschlossen werden. Die Hülle kann aber auch in flüssiger Form auf das Kernmaterial aufgebracht werden, beispielsweise durch Besprühen, Eintauchen, oder ähnlichen bekannten Verfahren.

Die Kapsel kann, insbesondere nach einem Benetzen oder Umspülen mit Wasser, eine maximale Kraft im Bruchfestigkeitstest, wie vorgängig beschrieben, von wenigstens 25 N, insbesondere wenigstens 50 N, bevorzugt wenigstens 100 N, aufnehmen.

Mit einer maximalen Kraft von 25 N oder mehr kann gewährleistet werden, dass die Kapsel in einer Brühkammer dicht eingeschlossen und deformiert werden kann, ohne dass sie beschädigt wird. Selbst wenn die Kapsel, beispielsweise in einer Richtung, ein Übermass gegenüber der Brühkammer aufweist, kann die Kapsel ohne Beschädigung der Hülle dicht zwischen zwei Brühkammerhälften eingeschlossen werden, so dass ein Getränk zubereitet werden kann. Sollte das Kernmaterial in Form eines Presslings vorliegen, kann dieser somit ohne Beschädigung der Hülle deformiert und aufgebrochen werden. Es wird eine optimale Extraktion gewährleistet.

Die Kapsel kann in trockenem Zustand ohne Beschädigung der Hülle in einem Bruchfestigkeitstest, wie vorgängig beschrieben, eine maximale Kraft von wenigstens 10 N, insbesondere wenigstens 15 N, bevorzugt wenigstens 20 N, aufnehmen.

Unter "trocken" oder "in trockenem Zustand" wird verstanden, dass die Kapsel noch nicht mit Wasser oder anderen Flüssigkeiten in Berührung gekommen ist. In diesem Zustand wird die Kapsel ausgeliefert und vom Benutzer vorzugsweise in eine Getränkezubereitungsmaschine eingesetzt.

Eine maximale Kraft von wenigstens 10 N bei Kapseln im trockenen Zustand stellt sicher, dass die Kapsel von einem Benutzer ohne spezielle Vorsichtsmassnahmen ergriffen und einer Getränkezubereitungsmaschine zugeführt werden kann, ohne dass die Kapsel zerbricht.

Die Kapsel kann in nassem Zustand einen Berstdruck von weniger als 5 bar aufweisen.

Unter dem Berstdruck wird der Innendruck verstanden, welcher benötigt wird, um die Hülle der Kapsel aufplatzen zu lassen. Zur Bestimmung des Berstdrucks wird die Kapsel für 180 min in Wasser bei einer initialen Temperatur von 75 °C eingetaucht. Das Wasser sinkt während der Eintauchzeit auf Raumtemperatur ab. Dabei ist zu beachten, dass die Kapsel komplett mit Wasser überdeckt ist. Nötigenfalls muss diese unter Wasser gehalten werden.

Wenn das Kernmaterial der Kapsel ein Pressling ist, muss dieser aufgelockert werden. Hierzu wird die Kapsel nach dem Eintauchen in Wasser einer Stauchbehandlung unterzogen. Die Kapsel wird in alle drei Dimensionen um jeweils 5 mm gestaucht bei einer Geschwindigkeit von 50 mm/min. Die Kapsel wird um 45° gedreht und nochmals in alle drei Dimensionen um 5mm gestaucht. Im Anschluss wird die Kapsel bei Raumtemperatur für weitere 120 min in Wasser bei Raumtemperatur getaucht. Die Hülle darf bei der Stauchbehandlung nicht beschädigt werden. Wenn der Pressling nicht zerbricht, besteht die Gefahr, dass der Berstdruck nicht korrekt bestimmt werden kann, da der Druck im Pressling nicht an die Hülle weitergegeben werden kann.

Die Kapsel wird zwischen zwei horizontalen parallelen Platten eingelegt, wobei die obere Platte mit einer Injektionsnadel versehen ist. Die Platten üben keinen Druck auf die Kapsel aus, lediglich die Injektionsnadel penetriert die Hülle der Kapsel. Die Nadelspitze bzw. die Injektionsöffnung der Nadel steht wenigstens um 0.5 mm weiter als die Dicke der nassen Kapselhülle von der oberen Platte vor. Durch die Injektionsnadel wird Wasser mit Raumtemperatur in die Kapsel eingeführt, wobei der Wasserdruck kontinuierlich ansteigt und überwacht wird. Der Wasserdruck wird solange erhöht, bis die Hülle der Kapsel aufreisst oder platzt. Der für das Aufreissen oder Platzen benötigte Druck ist der Berstdruck.

Die maximale Kapsel-Volumenzunahme beim Befüllen der Kapsel mit Wasser, wie beschrieben, mit einem Druck von maximal 18 bar kann ohne Beschädigung der Hülle wenigstens 15 %, insbesondere wenigstens 20 %, bevorzugt wenigstens 25 %, besonders bevorzugt wenigstens 30 %, betragen, bezogen auf das Anfangsvolumen.

Die Hülle kann das Kernmaterial vollflächig und/oder formschlüssig umhüllen. Durch eine vollflächige Umhüllung kann sichergestellt werden, dass die Hülle komplett geschlossen ist. Das Kernmaterial ist somit geschützt vor Umgebungseinflüssen. Wenn die Hülle formschlüssig ist, kann auf eine Begasung mit Inertgas verzichtet werden. Die Haltbarkeit wird ohne zusätzlichen Aufwand verlängert und die Nachhaltigkeit wird durch ein minimales Packmass, welches ein geringeres Packvolumen ermöglicht, verbessert. Die gesamte Logistik vom Hersteller zum Verbraucher kann optimiert werden. Das Kernmaterial gibt der Hülle durch ihre Stützwirkung die benötigte mechanische Stabilität. Dies wiederum vereinfacht das Handling. Ausserdem wird durch eine formschlüssige Umhüllung eine Penetration der Hülle durch ein Einstechmittel bei der Verwendung der Kapsel in einer entsprechenden Getränkezubereitungsmaschine vereinfacht.

Das Kernmaterial kann verdichtet sein. Durch Verdichten kann die Menge an Kernmaterial bei gleichbleibendem Volumen vergrössert werden. Die Kosten für die Verpackung der Kapseln und somit auch die Transportkosten können reduziert werden. Insbesondere bei einer Verdichtung zu einem Pressling wird das gesamte Handling von der Produktion bis zum Endbenutzer vereinfacht, da die Form der Kapsel dadurch immer etwa gleich ist. Es hat sich gezeigt, dass der Endbenutzer einem Pressling eine höhere Qualität assoziiert als einer weichen Form. Wenn das Kernmaterial als Pressling vorliegt, sollte sichergestellt werden, dass der Pressling vor der Getränkezubereitung aufgelockert wird. Dadurch kann sichergestellt werden, dass beispielsweise bei Kaffee kein "Channeling" eintritt, sondern das gesamte Kaffeebett gleichmässig vom Wasser durchdrungen wird. Das Auflockern eines allfälligen Presslings kann vom Benutzer selbst durchgeführt werden. Ebenso ist es denkbar, dass das Auflockern in einer Getränkezubereitungsmaschine erfolgt.

Die Hülle der Kapsel kann hygroskopisch sein, insbesondere so dass deren Gewicht beim Eintauchen in einem Wasserbad von 100 °C ohne Druck während 10 s um wenigstens 10 %, insbesondere wenigstens 50 %, bevorzugt wenigstens 100 %, besonders bevorzugt um wenigstens 150 %, zunehmen kann. Zur Bestimmung der Wasseraufnahme wird 1 cm2 der Kapselhülle ausgeschnitten und von Kernmaterial befreit, bevor die Probe während 10 s in 100 °C heissem Wasser während 10 s eingeweicht wird. Um auf der Hülle anhaftendes Wasser zu beseitigen, wird die Probe 5x auf einem Haushaltpapier gewendet. Durch die hygroskopische Eigenschaft der Hülle, nimmt diese bei einer Benetzung oder Umspülung in kurzer Zeit Wasser auf. Dies ist vorteilhaft, da sich damit die Kapsel bei deren Kompostierung einfacher auflösen kann. Ausserdem kann beispielsweise die Verformbarkeit der Hülle beeinflusst werden. Die Hülle kann sich dann einfacher einer äusseren Form, beispielsweise der Brühkammer, anpassen.

Die Dicke der Hülle im trockenen Zustand kann zwischen 0.01 mm und 3.5 mm, insbesondere zwischen 0.02 mm und 1.5 mm, bevorzugt zwischen 0.05 mm und 0.2 mm, betragen. Es hat sich gezeigt, dass eine Hülle mit dieser Dicke optimale Eigenschaften aufweist. Eine dünnere Hülle würde einfacher brechen oder bersten. Eine dickere Hülle wäre schwieriger zu durchstechen, eine Kapsel mit einer dickeren Hülle somit schwieriger zu extrahieren.

Die Hülle kann eine oberflächenbereinigte Oxygen Transmission Rate (OTR) in der Einheit cm3 pro m2 pro Tag pro 0.21 bar von weniger als 50, vorzugsweise weniger als 20, vorzugsweise weniger als 10, besonders bevorzugt weniger als 5, aufweisen. Die OTR gibt an, welche Menge an Sauerstoff pro Flächen- und Zeiteinheit durch die Hülle diffundiert. Mit solchen OTR-Werten kann gewährleistet werden, dass die Frische der Kapseln nach dem Öffnen einer Verpackung für wenigstens drei Monate gewährleistet werden kann. Der Konsument kann somit die Kapseln über eine gewisse Zeit ohne Qualitätsverlust mit geöffneter Verpackung lagern.

Die komplette Kapsel kann heimkompostierbar gemäss den Zertifizierungsprogrammen NF T 51-800 und AS 5810 sein. Unter "heimkompostierbar" wird dabei verstanden, dass das Material gemäss den Zertifizierungsprogrammen NF T 51-800:2015-11-14 (Plastics - Specifications for plastics suitable for home composting) und AS 5810:2010 (Biodegradable plastics - Biodegradable plastics suitable for home composting) zumindest heimkompostierbar ist. Dies bedeutet eine Zersetzung (biodegradation) von mindestens 90% des Materials unter Freisetzung von CO₂ innerhalb von 12 Monaten bei einer Temperatur von 25±5 °C sowie eine Fragmentierung (Desintegration) von mindestens 90% des Materials innerhalb von 6 Monaten bei einer Temperatur von 25±5 °C. Die Kapsel kann somit nach dem Gebrauch der Kompostierung übergeben werden. Es ist keine separate Entsorgung nötig.

Die Hülle der Kapsel kann eines oder mehrere der folgenden Materialien umfassen: PE, PP, Naturkautschuk, Silikon, Polysaccharide oder deren Derivate, Verbindungen aus pflanzlicher Stärke und Fettsäuren, Polyvinylalkohol, Polyvinylalkoholcopolymer, Vlies, Proteine, Aluminium, Laminate, biologisch abbaubare Kunststoffe.

Die Kapsel kann eine runde, insbesondere kugelrunde, Form aufweisen. Ebenso ist aber auch denkbar, dass die Form der Kapsel anderen geometrischen Körpern im Wesentlichen entspricht, wie beispielsweise einem Würfel, Quader, Prisma, Pyramide, Zylinder, Kegelstumpf, Kegel, Torus, Ellipsoid, usw. Dabei ist zu beachten, dass allfällige Ecken und Kanten vorzugsweise nicht scharf ausgebildet sondern abgerundet sind.

Ein weiterer Aspekt der vorliegenden Erfindung betrifft eine Kapsel, insbesondere wie vorgängig beschrieben, zur Verwendung in einer Getränkezubereitungsmaschine für die Getränkezubereitung. Die Getränkezubereitungsmaschine umfasst eine Brühkammer mit einer Form und einem Kammervolumen zur Aufnahme der Kapsel. Die Brühkammer weist Penetrationsmittel zum Einstechen und Einleiten von Wasser in die Kapsel und Perforationsmittel zum Bilden eines Auslasses aus der Kapsel auf. Die Kapsel weist eine Form und ein Trockenvolumen vor dem Einleiten von Wasser in die Kapsel und ein Nassvolumen während des Einleitens von Wasser auf. Während des Einleitens von Wasser nimmt das Nassvolumen der Kapsel zu. Die Hülle der Kapsel ist derart verformbar ausgestaltet, dass die Form der Kapsel ohne Beschädigung der Hülle an die Form der Brühkammer anpassbar ist, dass das maximale Nassvolumen der Kapsel während der Getränkezubereitung im Wesentlichen dem Kammervolumen der Brühkammer entspricht.

Unter dem maximalen Nassvolumen wird das maximale Volumen der in der Brühkammer eingeschlossenen Kapsel verstanden, welches die Kapsel während dem Einleiten von Wasser in die Kapsel einnimmt. Dabei wird zur Bestimmung des maximalen Nassvolumens 200 ml Wasser unter einem Druck von 6 bar mit einer Durchflussrate von 200 ml/min in die Kapsel eingeleitet.

Durch die verformbare Ausgestaltung der Hülle und die Anpassung des Volumens der Kapsel an das Kammervolumen der Brühkammer während des Einleitens von Wasser in die Kapsel kann sichergestellt werden, dass die Kapsel und die Brühkammer optimal aufeinander abgestimmt sind. So ist es beispielsweise nicht nötig, dass das Volumen der Kapsel schon vor der Benutzung der Kapsel mit demjenigen der Brühkammer übereinstimmt. Es ist sogar denkbar, dass eine Kapsel mit einem kleinsten Durchmesser verwendet werden kann, welcher grösser als ein kleinster Durchmesser der Brühkammer ist. Ebenso sind mit der gleichen Brühkammer Kapsel mit unterschiedlichen Grössen verwendbar. Beispielsweise kann somit die Kapsel ohne Einhaltung von engen Toleranzen hergestellt werden, ohne dass eine Qualitätseinbusse in Kauf genommen werden muss. Die Herstellungskosten lassen sich verringern.

Das Anpassen des Nassvolumens der Kapsel an das Kammervolumen der Brühkammer erfolgt ohne Beschädigung der Hülle. Somit kann nach der Getränkezubereitung die Kapsel als Ganzes aus der Brühkammer entfernt werden, ohne dass das Kernmaterial die Brühkammer verschmutzt.

Eine Anpassung des Nassvolumens an das Kammervolumen der Brühkammer kann erst ab Einleiten einer gewissen Wassermenge erfolgen. Üblicherweise ist ein Ristretto die kleinste Bezugseinheit eines Getränks, welches aus Kapseln hergestellt wird. Ein Ristretto wird üblicherweise mit 15-25 ml Wasser zubereitet. Das maximale Nassvolumen wird dabei bereits mit 10 ml Wasser, optional mit anschliessender Vorbrühpause von 5 s, erreicht. Der Druck liegt dabei bei ca. 5 bar.

Das maximale Nassvolumen, d.h. das maximale Volumen der in der Brühkammern eingeschlossenen Kapsel, welches die Kapsel während dem Einleiten von Wasser in die Kapsel einnimmt, kann zwischen 11 % und 75 %, insbesondere zwischen 30 % und 70 %, bevorzugt zwischen 35 % und 65 %, grösser als das Trockenvolumen sein. Für die Bestimmung des maximalen Nassvolumens wird das Volumen der Kapsel ohne Berücksichtigung der in die Kapsel eingedrungenen Penetrationsmittel und ohne die den Auslass gewährleistenden Perforationsmittel bestimmt. Es hat sich gezeigt, dass bei verdichtetem Kernmaterial, insbesondere wenn dieses als Pressling vorliegt, eine erste Volumenzunahme bereits beim Auflockern des Presslings in der Hülle erfolgt. Eine weitere Volumenzunahme basiert auf dem Aufquellen des Kernmaterials, wenn dieses mit Wasser in Kontakt kommt. Basierend auf diesem Aufquellen resultiert bereits eine Volumenzunahme von ca. 15 % gegenüber dem Trockenvolumen. Dadurch können die gewünschten Inhaltsstoffe besser extrahiert werden. Ausserdem kann mit der genannten Volumenzunahme bis zum maximalen Nassvolumen auch sichergestellt werden, dass beispielsweise bei Kaffee kein "Channeling" eintritt, sondern das gesamte Kaffeebett gleichmässig von Wasser durchdrungen wird.

Die Form der Kapsel kann nach der Getränkezubereitung im Wesentlichen der Form der Brühkammer entsprechen. Da das maximale Nassvolumen der Kapsel während der Getränkezubereitung im Wesentlichen dem Volumen der Brühkammer entspricht, passt sich auch die Form entsprechend an. Nach der Getränkezubereitung wird die Kapsel aus der Brühkammer entnommen. Wenn sich das Kernmaterial nicht auflöst und lediglich durch den Kontakt mit Wasser aufschwillt, wird die Form dabei im Wesentlichen nicht verändert. Falls es sich beim Kernmaterial jedoch wenigstens teilweise um eine lösliche Substanz handelt, kann die Form der Kapsel aufgrund der fehlenden Stützwirkung des Kernmaterials nach der Getränkezubereitung nicht mehr der Form der Brühkammer entsprechen und teilweise kollabieren. Je nach Eigenschaften der Hülle, insbesondere deren Elastizität, kann die Kapsel ihr Volumen verringern, sobald der Wasserdruck des einleitenden Wassers nachlässt. Es ist aber ebenso denkbar, dass insbesondere bei sich auflösendem Kernmaterial sich auch die Hülle komplett auflöst. Es bleibt somit kein Rückstand in der Brühkammer vorhanden.

Ein weiterer Aspekt der vorliegenden Erfindung betrifft ein Verfahren zur Zubereitung eines Getränks mit einer Kapsel, insbesondere mit einer Kapsel wie vorgängig beschrieben. Die Kapsel weist dabei vor deren Benutzung ein Trockenvolumen auf. Das Verfahren umfasst die folgenden Schritte:
- Einsetzen der Kapsel in eine offene Brühkammer,
- Einschliessen der Kapsel durch Verschliessen der Brühkammer, so dass die Brühkammer eine Form und ein Volumen definiert,
- Zubereiten eines Getränks aus der Kapsel durch Einleiten von Wasser in die Kapsel, wobei das Trockenvolumen zu einem Nassvolumen wird.

Dabei erweitert sich die Kapsel bei der Getränkezubereitung. Die Form und das maximalen Nassvolumen der Kapsel passen sich im Wesentlichen der Form und dem Volumen der Brühkammer an.

Das maximale Nassvolumen kann zwischen 11 % und 75 %, insbesondere zwischen 30 % und 70 %, bevorzugt zwischen 35 % und 65 %, grösser als das Trockenvolumen sein. Es hat sich gezeigt, dass bei verdichtetem Kernmaterial, insbesondere wenn dieses als Pressling vorliegt, eine erste Volumenzunahme bereits beim Auflockern des Presslings erfolgt. Dieses Auflockern basiert teilweise auf der plastischen und/oder elastischen Deformation der Kapsel beim Einschliessen der Kapsel, wenn beispielsweise der kleinste Durchmesser der Kapsel grösser als der kleinste Innendurchmesser der Brühkammer ist. Eine weitere Volumenzunahme basiert auf dem Aufquellen des Kernmaterials, wenn dieses mit Wasser in Kontakt kommt. Eine weitere Volumenzunahme und somit eine weitere Ausdehnung der Hülle erfolgt durch das Einspritzen von Wasser in die Kapsel und durch die Druckererhöhung. Das Volumen der Kapsel wird soweit vergrössert, bis sich die Hülle an die Aussenwand der Brühkammer weitgehend anlegt.

Je nach Ausgestaltung der Brühkammer und der Kapsel kann beim Verschliessen der Brühkammer die Kapsel plastisch und/oder elastisch deformiert werden. Beispielsweise kann loses Kernmaterial so verdichtet werden, dass eine gleichmässige Extraktion durch das Kernmaterial ohne Ausbildung von Kanälen erfolgt.

Die Form der Brühkammer kann einen kleinsten Innendurchmesser aufweisen, welcher geringer ist als der kleinste Aussendurchmesser der Kapsel. Somit deformiert sich die Kapsel bereits beim Verschliessen der Brühkammer. Wenn das Kernmaterial verdichtet ist oder einen Pressling umfasst, wird dieser bereits beim Verschliessen der Brühkammer aufgelockert. Die Dichte des in der Hülle eingeschlossenen Kernmaterials wird reduziert. Es kann sichergestellt werden, dass das Wasser beim Einleiten durch das Kernmaterial hindurchdringen kann. Eine Über- oder Unterextraktion kann somit vermieden werden und es wird sichergestellt, dass das Kernmaterial gleichmässig mit dem Wasser in Kontakt kommt.

Vor dem Einleiten von Wasser in die Kapsel kann die Kapsel mit Wasser benetzt oder umspült werden. Je nach Ausgestaltung der Hülle kann deren Verformbarkeit durch Benetzen oder Umspülen mit Wasser beeinflusst werden. Beispielsweise kann die Kammer mit 5-15 ml Wasser mit einer Temperatur von 80-100 °C für 1-10 s geflutet werden. Das Wasser wird hierzu drucklos in die Kammer eingeleitet und anschliessend wieder über einen Auslass abgeführt. Die Kapsel kann aber auch bereits vor dem Einsetzen in die Brühkammer oder vor dem Verschliessen der Brühkammer mit Wasser benetzt oder umspült werden. Es versteht sich von selbst, dass das für das Benetzten oder Umspülen benötigte Spülwasser nicht zum Getränkeauslass der Maschine geleitet werden kann sondern von diesem getrennt abgeführt werden sollte.

Ein weiterer Aspekt der vorliegenden Erfindung betrifft ein System umfassend eine Kapsel, insbesondere wie vorgängig beschrieben, und eine Getränkezubereitungsmaschine. Die Getränkezubereitungsmaschine weist eine Brühkammer mit einer Form und einem Volumen zur Aufnahme der Kapsel auf. Die Brühkammer weist Penetrationsmittel zum Einstechen und Einleiten von Wasser in die Kapsel und Perforationsmittel zum Bilden eines Auslasses aus der Kapsel auf. Die Kapsel weist eine Form und ein Trockenvolumen vor dem Einleiten von Wasser und ein Nassvolumen während des Einleitens von Wasser auf. Dabei ist die Hülle der Kapsel derart dehnbar ausgestaltet, dass die Form der Kapsel im Wesentlichen an die Form der Brühkammer anpassbar ist, so dass das maximale Nassvolumen der Kapsel im Wesentlichen dem Volumen der Brühkammer entspricht.

Dadurch, dass die Kapsel während des Einleitens von Wasser ihre Form und ihr Volumen der Brühkammer anpassen kann, ist produktionsseitig keine genaue Übereinstimmung von Kapsel und Brühkammer nötig. Es kann mit relativ grossen Toleranzen gefertigt werden. Trotzdem kann eine optimale Abdichtung der Kapsel in der Brühkammer erfolgen, so dass kein Wasser ausserhalb der Kapsel vom Einlass zum Auslass der Brühkammer fliest.

Das Anpassen des Nassvolumens der Kapsel an das Volumen der Brühkammer kann ohne Beschädigung der Hülle erfolgen. Somit kann nach der Getränkezubereitung die Kapsel als Ganzes aus der Brühkammer entfernt werden, ohne dass das Kernmaterial die Brühkammer verschmutzt.

Das Nassvolumen kann zwischen 11 % und 75 %, insbesondere zwischen 30 % und 70 %, bevorzugt zwischen 35 % und 65 %, grösser als das Trockenvolumen sein. Eine Volumenzunahme ist beispielsweise bei Kaffee nützlich, um dem Aufquellen des Kaffees Rechnung zu tragen. Ausserdem ist es vorteilhaft, wenn verdichtetes Kaffeepulver sich lockern kann, so dass eine gleichmässige Extraktion erfolgen kann.

Die Form der Brühkammer kann einen kleinsten Innendurchmesser aufweisen, welcher geringer ist als der kleinste Aussendurchmesser der Kapsel. Diese Konfiguration begünstigt insbesondere bei einem Pressling, beispielsweise einem Kaffeepulver-Pressling, die Auflockerung, so dass eine optimale Extraktion erfolgen kann.

### Beispiel:

Ein kugelförmiger Pressling für die Kaffeezubereitung wurde hergestellt durch Verdichten von 6 g geröstetem gemahlenem Kaffeepulver. Anschliessend wurde eine wässrige Lösung aus entmineralisiertem Wasser, Cellulose (VITACEL Cellulose, JRS, Deutschland) und Natriumalginat (VIVAPUR Sodium Alginate, medium viscosity, JRS, Deutschland) bereitgestellt. Dabei wurde ein System in Form einer wässrigen Lösung mit einer Konzentration an Cellulose von 1.0 % und Natriumalginat von 1.7 % w/w bezogen auf das Gesamtgewicht der wässrigen Lösung hergestellt. Der Lösung wurde anschliessend 3.5 % w/w Sorbitol zugegeben, bezogen auf das Gesamtgewicht des Systems. Parallel wurde eine wässrige Lösung aus entmineralisiertem Wasser und 5.0 % w/w Calciumchlorid (Calciumchlorid Dihydrat, C. Roth, Deutschland) bereitgestellt. Der Pressling wurde zunächst 10 s in die wässrige Cellulose-haltige Natriumalginat-Lösung eingetaucht, anschliessend 30 s in die wässrige Calciumchlorid-Lösung und ca. 8 min bei 50 °C im Luftstrom getrocknet. Anschliessend wurde der Pressling ein zweites Mal für 10 s in die wässrige Cellulose-haltige Natriumalginat-Lösung eingetaucht, anschliessend für 30 s in die wässrige Calciumchlorid-Lösung und für mindestens 8 min bei 50°C im Luftstrom getrocknet.

Zehn so erstellte Kapseln wurden in einem Wasserbad mit einer Temperatur von 75 °C für 5 s eingetaucht und unter Wasser gehalten. Das Wasser war dabei drucklos. Anschliessend wurde die maximale Ausdehnung der Kapsel im Bruchfestigkeitstest bestimmt.

Es konnte eine maximale Ausdehnung von mindestens 53 % gemessen werden.

Weitere zehn Proben wurden in einer Brühkammer extrahiert, wobei das Volumen der Brühkammer 45 % grösser als das Trockenvolumen der Kapseln war. Die Kapseln konnten nach der Extraktion als Ganzes aus der Brühkammer entfernt werden. Die Hülle war nicht beschädigt und die Brühkammer wurde entsprechend nicht verschmutzt.

Anhand von Figuren, welche lediglich Ausführungsbeispiele darstellen, wird die Erfindung im Folgenden näher erläutert. Es zeigen:
- Figur 1a:: Eine schematische Darstellung einer erfindungsgemässen kugelförmigen Kapsel in einer Vorrichtung zum Bruchfestigkeitstest.
- Figur 1b:: Die Darstellung aus Figur 1a, wobei eine Kraft auf die Kapsel wirkt.
- Figur 2a:: Eine schematische Darstellung einer erfindungsgemässen kugelförmigen Kapsel in einer Vorrichtung zum Bestimmend des Berstdruckes.
- Figur 2b:: Die Darstellung aus Figur 2a, wobei Wasser mit einem Druck in die Kapsel eingeleitet wird.
- Figur 3:: Eine schematische Darstellung einer offenen Brüheinheit mit bereits eingeführter erfindungsgemässer Kapsel vor der Getränkezubereitung.
- Figur 4:: Eine schematische Darstellung der Brüheinheit aus Figur 3 in einer ersten Schliessposition mit eingelegter erfindungsgemässer Kapsel.
- Figur 5:: Eine schematische Darstellung der Brüheinheit aus Figur 3 in einer zweiten Schliessposition mit eingelegter erfindungsgemässer Kapsel.
- Figur 6:: Eine schematische Darstellung der Brüheinheit aus Figur 5, während der Getränkezubereitung.
- Figur 7:: Eine schematische Darstellung einer offenen Brüheinheit mit erfindungsgemässer Kapsel nach der Getränkezubereitung.
- Figur 8:: Eine schematische Darstellung einer offenen Brüheinheit beim Kapselauswurf nach der Getränkezubereitung.

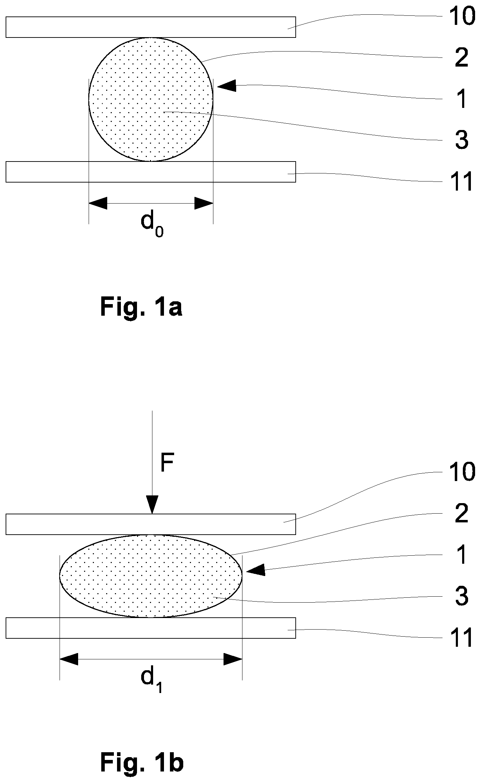

Figur 1a zeigt eine schematische Darstellung einer erfindungsgemässen kugelförmigen Kapsel 1 in einer Vorrichtung zum Bruchfestigkeitstest. Die Vorrichtung zum Bruchfestigkeitstest weist eine untere Platte 11 oder Trägerplatte und eine obere Platte 10 auf. Die beiden Platten sind horizontal und zueinander parallel ausgerichtet und Teil eines nicht dargestellten Zug-Druck-Prüfgeräts. Die Kapsel 1 weist eine Hülle 2 und ein davon umschlossenes Kernmaterial 3 auf. Die Kapsel 1 weist eine Aussendimension d₀ ohne Kraft parallel zu den Platten 10, 11 auf. Die Kapsel 1 ist auf der unteren Platte 11 in etwa mittig aufgelegt. Die obere Platte 10 liegt kraftlos auf der Hülle 2 der Kapsel 1 auf.

Zur Bestimmung der maximalen Kraft der Kapsel 1 im Bruchfestigkeitstest wird die obere Platte 10 mittels des Zug-Druck-Prüfgeräts langsam abgesenkt und ein Kraft-Weg-Diagramm aufgezeichnet. In Figur 1b ist dargestellt, wie die obere Platte 10 mit einer Kraft F auf die Kapsel 1 wirkt. Aufgrund der einwirkenden Kraft F verformt sich die Kapsel 1 durch eine Ausdehnung in Querrichtung zur einwirkenden Kraft F. Die Aussendimension d₁ wird mit zunehmender Kraft F grösser. Die Ausdehnung in Querrichtung zur einwirkenden Kraft F wird visuell kontinuierlich erfasst. Die maximale Ausdehnung der Kapsel 1 in Richtung quer zur einwirkenden Kraft F ist dann erreicht, wenn die Hülle 2 der Kapsel 1 beschädigt wird. Die gezeigte Kapsel 1 kann sich in Richtung quer zur einwirkenden Kraft F um 30 % gegenüber ihrer ursprünglichen Aussendimension d₀ ausdehnen, d.h. die Aussendimension d₁ ist um 30 % grösser als die ursprüngliche Aussendimension d₀. Erst bei Überschreiten dieser Aussendimension d1 reisst die Hülle 2 der Kapsel 1 auf. Die hierzu benötigte Kraft F beträgt 120 N.

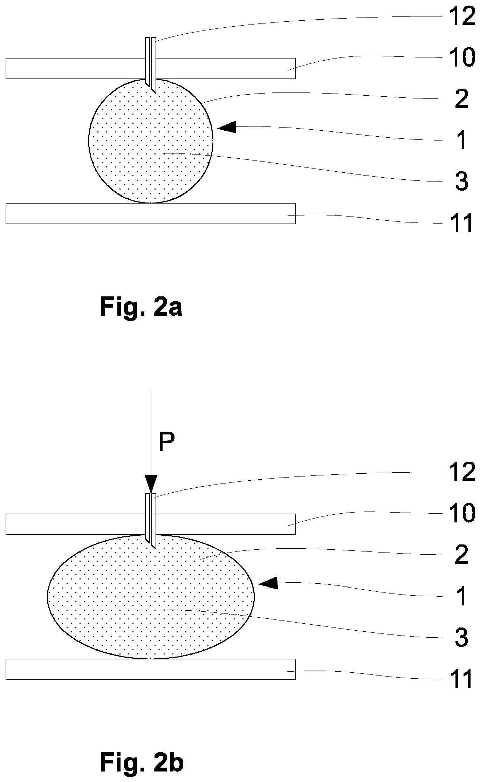

Figur 2a zeigt eine schematische Darstellung einer erfindungsgemässen kugelförmigen Kapsel 1 in einer Vorrichtung zum Bestimmend des Berstdruckes. Die Vorrichtung zum Bestimmen des Berstdruckes weist wiederum eine untere Platte 11 oder Trägerplatte und eine obere Platte 10 auf. Die beiden Platten sind horizontal und zueinander parallel ausgerichtet. Die obere Platte 10 weist zusätzlich eine Injektionsnadel 12 auf, durch welche Wasser mit Raumtemperatur in die Kapsel eingeleitet werden kann. Zwischen den beiden Platten 10, 11 ist die Kapsel 1. Dabei weist die Kapsel 1 wiederum eine Hülle 2 und einen von der Hülle umschlossenes Kernmaterial 3 auf. Die Hülle 2 der Kapsel 1 wird von der Injektionsnadel 12 durchstochen, welche 2 mm von der oberen Platte vorsteht. Die Platten 10, 11 üben keinen Druck auf die Kapsel 1 aus

Figur 2b zeigt wie durch die Injektionsnadel 12 Wasser mit Raumtemperatur in die Kapsel 1 eingeführt wird. Hierzu ist die Injektionsnadel 12 mit einer nicht dargestellten Pumpe verbunden. Ausserdem wird der Druck P des eingeleiteten Wassers mittels eines Manometers (nicht dargestellt) kontinuierlich erfasst. Der Wasserdruck wird solange erhöht, bis die Hülle 2 der Kapsel 1 aufreisst oder platzt. Der für das Aufreissen oder Platzen der Hülle 2 benötigte Druck P ist der Berstdruck.

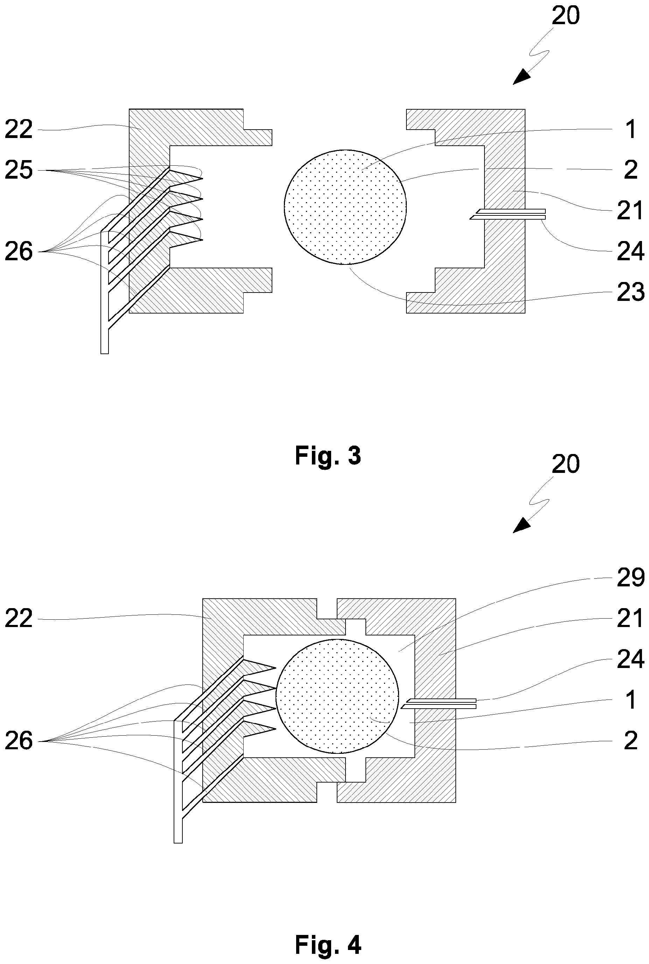

Die Figuren 3 bis 8 zeigen schematisch die einzelnen Schritte bei der Zubereitung eines Getränkes mit einer erfindungsgemässen Kapsel 1 und einer Getränkezubereitungsmaschine. Dabei sind jeweils dieselben Komponenten in unterschiedlichen Positionen dargestellt.

Figur 3 zeigt eine offene Brüheinheit 20 der Getränkezubereitungsmaschine mit bereits eingeführter erfindungsgemässer Kapsel 1 vor der Getränkezubereitung. Die Brüheinheit 20 wird durch zwei voneinander getrennte Teile gebildet, einer ersten Brühkammerhälfte 21 und einer zweiten Brühkammerhälfte 22. Es versteht sich von selbst, dass die Brüheinheit 20 auch aus mehr als zwei Teilen zusammengesetzt werden kann. Zwischen den beiden Brühkammerhälften 21, 22 ist eine Einlassöffnung zum Einführen der Kapsel 1 ausgebildet.

Die Kapsel 1 liegt ist in einer Aufnahmeposition 23 der ersten Brühkammerhälfte 21 angeordnet. In dieser ersten Brühkammerhälfte 21 ist ein Penetrationsmittel 24 derart angeordnet, dass dieses aus der Wand der ersten Brühkammerhälfte 21 vorsteht aber beim Einführen der Kapsel 1 in die Aufnahmeposition 23 eine Hülle 2 der Kapsel 1 nicht verletzt wird.

Die zweite Brühkammerhälfte 22 weist in einer Seitenwand Perforationsmittel 25 auf, welche die Hülle 2 der Kapsel 1 durchstechen können. Sie sind bei offener Brüheinheit 20 jedoch nicht in Kontakt mit der Kapsel 1. Die Seitenwand mit den Perforationsmitteln 25 weist mehrere Auslassöffnungen 26 auf, welche ein Ableiten eines zubereiteten Getränks erlauben. Diese Auslassöffnungen 26 könne auch zum Ableiten von Restwasser nach der Getränkezubereitung oder von Spülwasser benutzt werden. Dieses Rest- oder Spülwasser wird nicht zum Getränkeauslass der Maschine geleitet.

Figur 4 zeigt wiederum in schematischer Darstellung die Brüheinheit 20 aus Figur 3 in einer ersten Schliessposition. In dieser ersten Schliessposition ist die Kapsel 1 in einem zwischen den beiden Brühkammerhälften 21, 22 gebildeten Spülraum 29 eingeschlossen. In dieser Position wird durch das Penetrationsmittel 24 Wasser in den Spülraum 29 eingeleitet und dieser geflutet. Beispielsweise kann hierzu 5-15 ml Wasser mit einer Temperatur von 80-100 °C verwendet werden. Die Auslassöffnungen 26 sind vorerst verschlossen. Die Kapsel 1 wird mit Wasser umspült. Bei einer hygroskopischen Ausgestaltung der Hülle 2 kann diese ihre Eigenschaften durch Aufnahme von Wasser verändern. Nach einer Einwirkzeit von 1-10 s können die Auslassöffnungen 26 geöffnet und der Spülraum 29 entleert werden. Es versteht sich von selbst, dass dieses Spülwasser separat abgeleitet und nicht zum Getränkeauslass der Maschine geführt werden sollte. Es kann auch eine Auslassöffnung 26 gezielt als Spülwasserauslass verwendet werden.

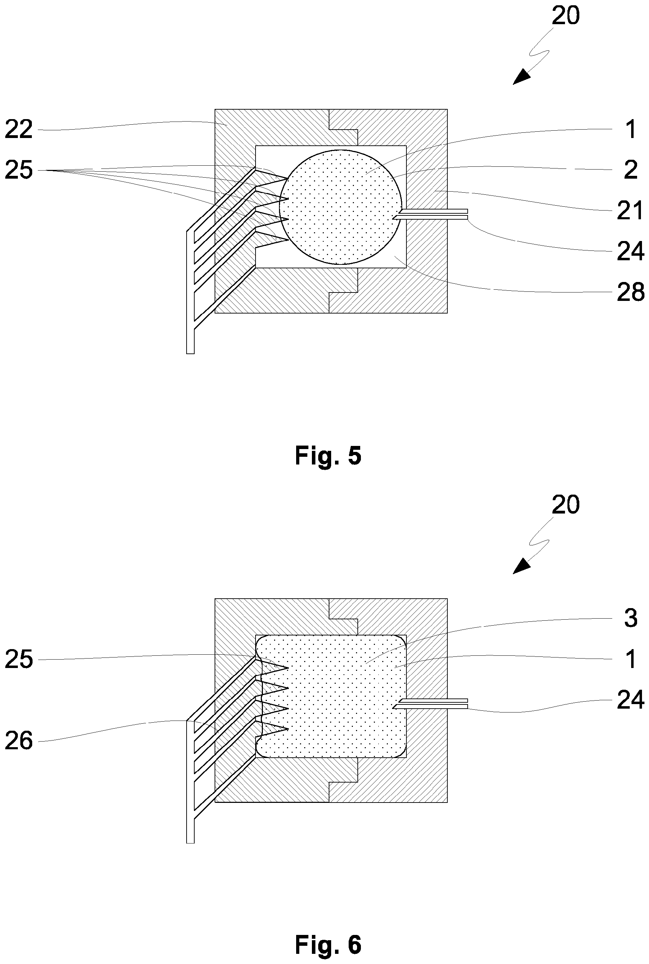

In Figur 5 ist die Brüheinheit 20 in einer zweiten Schliessposition dargestellt. Die beiden Brühkammerhälften 21, 22 sind weiter zusammengefahren und bilden ein geschlossenes Kammervolumen 28. Das Penetrationsmittel 24 und die Perforationsmittel 25 haben die Hülle 2 der Kapsel 1 durchstossen. Durch das Penetrationsmittel 24 kann nun die für die Getränkezubereitung erforderliche Menge an Wasser in die Kapsel 1 eingebracht werden.

Figur 6 zeigt in einer schematischen Darstellung die Brüheinheit 20 aus Figur 5 während der Getränkezubereitung. Durch den Wasserdruck und das Aufquellen des Kernmaterials 3 der Kapsel 1 hat sich diese ausgedehnt und füllt den gesamten Brühraum 28 (siehe Figur 5) aus. Es versteht sich von selbst, dass dabei scharfkantige Ecken oder die Zwischenräume zwischen den Perforationsmittel nicht komplett von der Kapsel 1 ausgefüllt werden. Dies hat jedoch auf die Funktion und die Qualität des zubereiteten Getränks keinen Einfluss. Das Wasser wird nun ausgehend vom Penetrationsmittel 24 durch das Kernmaterial bis zu durch die Perforationsmittel 25 gebildeten Öffnung durch die Kapsel 1 gepresst. Je nach Art des Kernmaterials 3 wird dieses zur Ausbildung eines Getränks extrahiert oder aufgelöst. Das zubereitete Getränk kann aus der Kapsel 1 durch von den Perforationsmitteln 25 gebildete Öffnungen verlassen und wird über die Auslassöffnungen 26 aus dem Brühraum abgeleitet. Ein allfällig separater Spülwasserauslass kann während der Getränkezubereitung verschlossen sein oder weiterhin offen bleiben.

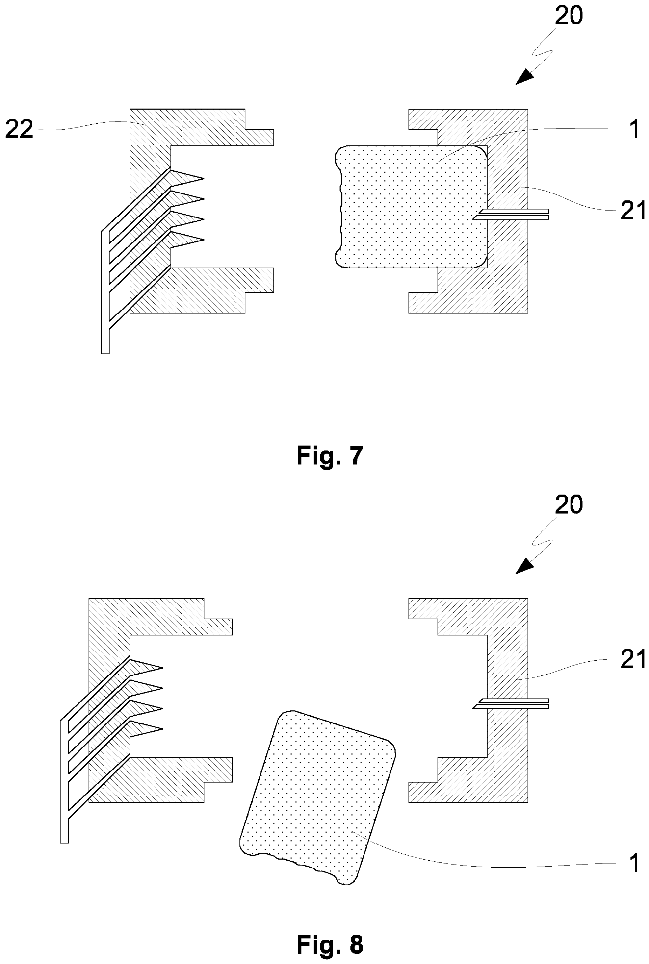

In Figur 7 ist in einer schematischen Darstellung die offene Brüheinheit 20 mit der erfindungsgemässen Kapsel 1 nach der Getränkezubereitung dargestellt. Die beiden Brühkammerhälften 21, 22 sind auseinandergefahren, so dass sich die Kapsel 1 entspannen kann.

Die Figur 8 zeigt das Auswerfen der Kapsel 1 aus der Brüheinheit 20. Hierzu kann die Brüheinheit 20 weiter geöffnet als in Figur 7 sein. Um das Auswerfen der Kapsel 1 sicher zu stellen, kann beispielsweise ein Auswerfer (nicht dargestellt) in bekannter Weise eingesetzt werden, welcher die Kapsel 1 nach dem Öffnen der Brüheinheit 20 aus der ersten Brühkammerhälfte 21 oder allenfalls der zweiten Brühkammerhälfte schiebt. Selbstverständlich sind auch andere Mechanismen zum Auswerfen der Kapsel 1 denkbar. Nach dem Zurückfahren des Auswerfers kann die Brüheinheit wieder in der Position wie in Figur 3 dargestellt gebracht werden. Eine weitere Kapsel kann eingeführt werden.

## Patentansprüche

1. Kapsel (1) zur Zubereitung eines Getränks, insbesondere eines Heissgetränks, umfassend
- ein Kernmaterial (3) zur Getränkezubereitung umfassend einen Pressling, und
- eine das Kernmaterial umschliessende Hülle (2),
**dadurch gekennzeichnet, dass** die Kapsel (1), insbesondere nach einem Umspülen mit Wasser, in einem Bruchfestigkeitstest eine maximale prozentuale Ausdehnung in einer Richtung quer zu einer Pressrichtung von wenigstens 15 %, insbesondere wenigstens 20 %, bevorzugt wenigstens 25 %, besonders bevorzugt wenigstens 30 %, aufweist.

2. Kapsel (1) nach Anspruch 1, wobei die Kapsel (1), insbesondere nach einem Umspülen mit Wasser, eine maximale Kraft im Bruchfestigkeitstest von wenigstens 25 N, insbesondere wenigstens 50 N, bevorzugt wenigstens 100 N, aufnimmt.

3. Kapsel (1) nach Anspruch 1 oder 2, wobei die Kapsel (1) in trockenem Zustand eine maximale Kraft in einem Bruchfestigkeitstest von wenigstens 10 N, insbesondere wenigstens 15 N, bevorzugt wenigstens 20 N, aufnimmt.

4. Kapsel (1) nach einem der vorhergehenden Ansprüche, wobei die Hülle (2) hygroskopisch ist, insbesondere deren Gewicht beim Eintauchen in einem Wasserbad von 100 °C ohne Druck während 10 s um wenigstens 10 %, insbesondere wenigstens 50 %, bevorzug wenigstens 100 %, besonders bevorzugt 150 %, zunimmt.

5. Kapsel (1) nach einem der vorhergehenden Ansprüche, wobei die Dicke der Hülle (2) in trockenem Zustand zwischen 0.01 mm und 3.5 mm, insbesondere zwischen 0.01 mm und 1.5 mm, bevorzugt zwischen 0.05 mm und 0.2, beträgt.

6. Kapsel (1) nach einem der vorhergehenden Ansprüche, wobei die Hülle (2) eine oberflächenbereinigte Oxygen Transmission Rate (OTR) in der Einheit cm3 pro m2 pro Tag pro 0.21 bar von weniger als 50, vorzugsweise weniger als 20, vorzugsweise weniger als 10, besonders bevorzugt weniger als 5, aufweist.

7. Kapsel (1) nach einem der vorhergehenden Ansprüche, wobei die komplette Kapsel (1) heimkompostierbar gemäss den Zertifizierungsprogrammen NF T 51-800 und AS 5810 ist.

8. Kapsel (1), insbesondere nach einem der vorhergehenden Ansprüche, zur Verwendung in einer Getränkezubereitungsmaschine für die Getränkezubereitung umfassend eine Brühkammer mit einer Form und einem Kammervolumen (28) zur Aufnahme der Kapsel, wobei die Brühkammer Penetrationsmittel (24) zum Einstechen und Einleiten von Wasser in die Kapsel (1) und Perforationsmittel (25) zum Aufstechen der Hülle (2) aufweist, wobei die Kapsel (1) eine Form und ein Trockenvolumen (4) vor dem Einleiten von Wasser und ein Nassvolumen beim Einleiten von Wasser aufweist, **dadurch gekennzeichnet, dass** die Hülle (2) der Kapsel (1) derart verformbar ausgestaltet ist, dass die Form der Kapsel (1) ohne Beschädigung der Hülle (2) an die Form der Brühkammer anpassbar ist, dass das maximale Nassvolumen (5) der Kapsel (1) während der Getränkezubereitung im Wesentlichen dem Kammervolumen (28) der Brühkammer entspricht.

9. Kapsel (1) nach Anspruch 8, wobei das maximale Nassvolumen (5) zwischen 11 % und 75 %, insbesondere zwischen 30 % und 70 %, bevorzugt zwischen 35 % und 65 %, grösser als das Trockenvolumen (4) ist.

10. Verfahren zur Zubereitung eines Getränks mit einer Kapsel (1), insbesondere mit einer Kapsel (1) gemäss einem der vorhergehenden Ansprüche, wobei die Kapsel (1) ein Trockenvolumen (4) aufweist, umfassend die Schritte:
- Einsetzen der Kapsel (1) in eine offene Brühkammer,
- Einschliessen der Kapsel (1) durch Verschliessen der Brühkammer, so dass die Brühkammer eine Form und ein Kammervolumen (28) definiert,
- Extrahieren eines Getränks aus der Kapsel (1) durch Einleiten von Wasser in die Kapsel (1), wobei das Trockenvolumen (4) zu einem Nassvolumen wird,
**dadurch gekennzeichnet, dass** sich die Kapsel (1) während der Getränkezubereitung erweitert und sich die Form und das maximalen Nassvolumen (5) der Kapsel (1) im Wesentlichen der Form und dem Kammervolumen (28) der Brühkammer anpassen.

11. Verfahren nach Anspruch 10, wobei das maximale Nassvolumen (5) zwischen 11 % und 75 %, insbesondere zwischen 30 % und 70 %, bevorzugt zwischen 35 % und 65 %, grösser als das Trockenvolumen (4) ist.

12. Verfahren nach Anspruch 10 oder 11, wobei die Kapsel (1) beim Verschliessen der Brühkammer plastisch und/oder elastisch deformiert wird.

13. Verfahren nach einem der Ansprüche 10 bis 12, wobei die Form der Brühkammer einen kleinsten Innendurchmesser aufweist, welcher geringer ist als der kleinste Aussendurchmesser der Kapsel (1) und sich die Kapsel (1) bereits beim Verschliessen der Brühkammer deformiert.

14. Verfahren nach einem der Ansprüche 10 bis 13, wobei beim Verschliessen der Brühkammer ein verpresstes Kernmaterial (3) der Kapsel (1) aufgelockert wird, so dass die Dichte des in der Hülle (2) eingeschlossenen Kernmaterials (3) reduziert wird.

15. System umfassend eine Kapsel (1), insbesondere gemäss einem der Ansprüche 1 bis 9, und ein Getränkezubereitungsmaschine, wobei die Getränkezubereitungsmaschine eine Brühkammer mit einer Form und einem Kammervolumen (28) zur Aufnahme der Kapsel (1) aufweist, wobei die Brühkammer Penetrationsmittel (24) zum Einstechen und Einleiten von Wasser in die Kapsel (1) und Perforationsmittel (25) zum Aufstechen einer Hülle (2) der Kapsel (1) aufweist, wobei die Kapsel (1) eine Form und ein Trockenvolumen (4) vor dem Einleiten von Wasser und ein Nassvolumen während dem Einleiten von Wasser aufweist, **dadurch gekennzeichnet, dass** die Hülle (2) der Kapsel (1) derart dehnbar ausgestaltet ist, dass die Form der Kapsel (1)im Wesentlichen der Form der Brühkammer anpassbar ist, so dass das maximale Nassvolumen (5) der Kapsel (1) im Wesentlichen dem Kammervolumen (28) der Brühkammer entspricht.
